Europäisches Patentamt

European Patent Office

Office européen des brevets

(11) Veröffentlichungsnummer: **0 564 914 A1**

## (12) EUROPÄISCHE PATENTANMELDUNG

(21) Anmeldenummer: 93104929.0

(51) Int. Cl.5: **B01D 46/52**, F01N 3/02

(22) Anmeldetag: 25.03.93

(30) Priorität: 30.03.92 DE 4210358

(43) Veröffentlichungstag der Anmeldung:
13.10.93 Patentblatt 93/41

(84) Benannte Vertragsstaaten:
DE FR GB IT NL SE

(71) Anmelder: **Thyssen Stahl Aktiengesellschaft**
**Kaiser-Wilhelm-Strasse 100**
**D-47166 Duisburg(DE)**

(72) Erfinder: **Behr, Friedrich, Prof. Dr. Ing.**
**Espenweg 19**
**W-4150 Krefeld(DE)**

(74) Vertreter: **Cohausz & Florack Patentanwälte**
**Postfach 14 01 61**
**Schumannstrasse 97**
**D-40237 Düsseldorf (DE)**

(54) Vorrichtung zur Vergrösserung von kleinen klebrigen Partikeln.

(57) Die Erfindung betrifft eine Vorrichtung zur Vergrößerung von kleinen klebrigen Partikeln, die aus gestapelten und/oder aufgewickelten, unter einem Winkel ($\alpha$) zur Folienlängsrichtung schräg gewellten Metallfolien besteht, wobei die Wellungen in benachbarten Folien kreuzweise liegend, in den benachbarten Folien zueinander offene Kanäle bilden und die durch diese Kanäle hindurchtretenden Teilströme sich gegenseitig einen Drall aufprägen. Kennzeichen der Erfindung ist, daß die Kanäle einen Winkel ($\alpha$) im Bereich von 45 und 60° zur Folienlängsrichtung bilden und die Kanalgeometrie und die Strömungsgeschwindigkeit auf die Ausbildung einer laminaren Strömung mit einer Reynoldszahl von < 1.900 abgestimmt sind, wobei die Reynoldszahl mit dem in der Überschneidung zweier sich kreuzender Kanäle größten vorkommenden Durchmesser d berechnet wird.

Fig. 1

Die Erfindung betrifft eine Vorrichtung zur Vergrößerung von kleinen klebrigen Partikeln, die aus gestapelten und/oder aufgewickelten, unter einem Winkel (α) zur Folienlängsrichtung schräg gewellten Metallfolien besteht, wobei die Wellungen in benachbarten Folien kreuzweise liegend, in den benachbarten Folien zueinander offene Kanäle bilden und die durch diese Kanäle hindurchtretenden Teilströme sich gegenseitig einen Drall aufprägen.

Es sind bereits Zentrifugalabscheider für Ruß aus Dieselmotoren bekannt, beispielsweise nach DE 38 30 761 C 2, bei der die Rußpartikel an der äußeren Umfangsfläche eines schrauben- oder spiralförmigen Gehäuses abgeschieden werden. An Hand der Zeichnung der Schrift ist erkennbar, daß die Kanalquerschnitte Durchmesser von mehreren zehn Millimetern und der Durchmesser der Strömungsdrehbewegung mehr als 100 $\phi$ mm beträgt. Solche Anordnung weist Reynoldszahlen der Strömung von $\gg$ 2300 in den Spiralkanälen auf, d.h., die Strömung ist, wie in den Rohren einer Abgasanlage auch, turbulent ausgebildet. Mit solcher Vorrichtung lassen sich keine Radialbeschleunigungen auf Rußteilchen von mehr als ca. 50000 m/s$^2$ erreichen, weil sonst sehr große Gasgeschwindigkeiten nötig wären, die zu hohen Druckverlusten führen. Die Vorrichtung nach DE 38 30 761 C 2 kann einzelne Tropfen von > 10 $\phi$ $\mu$m abscheiden, für kleine Rußdurchmesser benötigt sie, wie dort angegeben, ein Filterelement.

Ähnliche geometrische Verhältnisse bietet auch die DE 39 35 095 A 1. Beide Vorrichtungen sind nicht in der Lage, Rußpartikel mit ca. 1 $\phi$ $\mu$m oder geringeren Durchmessern zu 90 %-Gewicht oder mehr nur durch Ausschleudern an einer Wand abzuscheiden. Es ist weiterhin bekannt, DE 35 45 762 C 2 und Fang, C. P.; Kittelson, D.B., SAE Technical Paper Series 840362, The Influence of Fibrous Diesel Particulate Trap on the Size Distribution of Emitted Particles, Int. Congress and Exposition Detroit, Michigan, Febr. 27-March 2, 1984, daß Metall- und Keramikfaserpackungen oder -lagen und daraus gefertigte Körper Rußpartikel zu Beginn der Beladung filtrieren und speichern, anschließend mehr und mehr vergrößerte Partikel mit ca. 1 $\phi$ $\mu$m Durchmesser abgeben, wenn vorher nicht der Ruß durch Temperaturerhöhung oxidiert wird.

Es ist auch bekannt, daß

1. Dieselruß je nach Betriebszustand des Motors zu ca. 30 bis 60 %-Gewicht aus Kondensat besteht und deshalb klebrig ist;

2. die Partikeldurchmesser-Verteilung von Motor zu Motor unterschiedlich ist und auch vom Betriebszustand abhängt.

Es gibt Dieselmotoren, die Ruß mit 0,01 $\phi$ bis 0,03 $\phi$ um emittieren und andere, wie in SAE 840362 angegeben, die Partikel mit 0,1 bis 2 $\phi$ $\mu$m (90 % Gewicht) primär abgeben.

Es ist ferner bekannt, daß übliche Abgasanlagen mit Drahtpackungen in den Schalldämpfern ausgerüstet sind und die Partikeldurchmesser nach Durchlaufen der Abgasanlage ca. 0,1 $\phi$ $\mu$m bis ca. 1 $\phi$ $\mu$m betragen, auch wenn primär nur 0,01 $\phi$ bis 0,03 $\phi$ $\mu$m vom Motor emittiert wurden.

Es ist ferner bekannt, daß Partikel mit ca. < 5 $\phi$ $\mu$m das Innere einer Lunge und Partikel mit ca. < 30 $\phi$ $\mu$m noch die Nasenschleimhäute erreichen.

Es ist fernerhin bekannt, aus Edelstahlfolie Automobil-Katalysator-Monolithe herzustellen, die eine pfeilförmige Wellenprägung der Folie aufweisen, z.B. DE 27 59 559.1, US 2, 887,456 (1959); US 3, 466,151; US 2, 940,168; DE 2, 219,130, CH 537 208 oder Einbauten aufweisen, die der Turbulenzerhöhung durch sich kreuzende Kanäle dienen. Diese Katalysatorträger dienen nicht dem Zweck der Vergrößerung der Rußpartikel, weisen deshalb auch Prägehöhen der Folien von 1 mm und mehr auf und besitzen deshalb auch nur Winkel (α) der Wellenprägung zur Folienrichtung von ca. 80° bis 88°. Damit lassen sich Rußpartikeldurchmesser nicht wesentlich vergrößern.

Die Wellenprägung erfolgt mit Hilfe eines Walzenpaares, welches Zähne nach Art einer Evolventenverzahnung besitzt.

Es ist bekannt, daß diese Körper eine besonders kleine Wärmekapazität aufweisen, wenn sie aus Edelstahlfolie mit einer Dicke von 40 bis 50 $\mu$m hergestellt werden. Ihr Nachteil ist ein höherer Druckverlust bei geringerem chemischen Umsatz als Katalysator für Ottomotoren im Vergleich zu Monolithen, die aus einem Wickel aus einer ebenen Folie und einer geprägten Folie bestehen.

Die Edelstahlfolie besteht üblicherweise aus einem Heizleiterstahl mit 18 bis 25 %-Gewicht Chrom, 3 bis 6 % Aluminium, 0,02 bis 0,05 % Seltenen Erden, d.h. 0,02 % Cer oder 0,2 bis 0,5 % Titan und Zirkon zur Erhöhung der Temperaturwechselbeständigkeit der Oxidschicht (Zunder), Rest Eisen und übliche Stahlverunreinigungen (z.B. 1.4767 Sonder Cer 0,02).

Es ist weiterhin bekannt, daß Katalysatorträger für Ottomotoren und Dieselmotoren eingesetzt werden, die aus Folienstücken bestehen und über zwei Mittelpunkte S-förmig zum Körper geformt werden. Das bringt Vorteile in bezug auf die Festigkeit des Körpers und auf die Festigkeit der Lötverbindung des Körpers zu einem Rohrmantel. Üblicherweise wird zum Löten das Lot L Ni 5 (USA: B Ni 5) mit ca. 10 %-Gewicht Si, 20 % Chrom, Rest Nickel verwendet und im Hochvakuum bei 1180°C gelötet, anschließend mehrere Stunden zum Diffusionsausgleich in den Löt-Kontaktstellen wärmebehandelt.

Solche Katalysatorträger werden voroxidiert, mit $\gamma$-Al$_2$O$_3$-wash-coat beschichtet und mit Edelmetallen und Hilfsstoffen als katalytisch aktive Substanzen dotiert bzw. imprägniert. Zur Reinigung des Abgases von Dieselmotoren sind sie nur soweit geeignet, als sie die organischen Stoffe des Kondensates mit Abgassauerstoff verbrennen. Harte Kohlenstoffteilchen, mit kleinerem Durchmesser als vor dem Eintritt in den Katalysator, verlassen die Abgasanlage und sind lungengängig.

Nach Stand der Technik sind die folgenden Vorrichtungen in der Lage, klebrige Partikel, z.B. der Ruß eines Dieselmotors, mit Partikeldurchmessern von ca. 0,01 bis 0,03 $\phi$ $\mu$m auf die Durchmesser 0,05 bis 1,5 $\phi$ $\mu$m, einzelne bis 10 $\phi$ $\mu$m, mit mehr als 90 %-Gewichtsanteil zu vergrößern:

a) übliche Abgasanlage eines PKW oder LKW mit zwei Schalldämpfern;

b) Drahtnetze oder Drahtgestricke , nach Art von Raschigringen der chemischen Industrie geprägt und aufgewickelt;

c) elektrostatische "Filter"

d) aus Draht oder Pulver hergestellte Körper

b) und d) können dabei motornah, d.h. vor dem ersten Schalldämpfer, eingebaut sein.

Es sind auch Dieselmotoren bekannt, die von sich aus Partikel mit mehr als 90 %-Gew. mit mehr als 0,1 $\phi$ $\mu$m emittieren.

Es ist nun Aufgabe der Erfindung, eine Vorrichtung und ein Verfahren zu schaffen, daß in der Lage ist, diese Partikel auf Durchmesser von mehr als 30 $\phi$ $\mu$m mit mehr als 90 %-Gewicht zu vergrößern, um Lungen- und Schleimhautgängigkeit zu vermeiden oder auch eine Schicht aus diesen Partikeln auf einer Wand abzuscheiden, wobei die Schicht unter Zufuhr von thermischer oder elektrischer Energie oxidiert werden kann.

Die Aufgabe wird bei der gattungsgemäßen Vorrichtung dadurch gelöst, daß die Kanäle einen Winkel ($\alpha$) im Bereich von 45 und 60° zur Folienlängsrichtung bilden und die Kanalgeometrie und die Strömungsgeschwindigkeit auf die Ausbildung einer laminaren Strömung mit einer Reynoldszahl von < 1.900 abgestimmt sind, wobei die Reynoldszahl mit dem in der Überschneidung zweier sich kreuzender Kanäle größten vorkommenden Durchmesser d berechnet wird.

Bevorzugte Ausgestaltungen der erfindungsgemäßen Vorrichtung sind in den Unteransprüchen gekennzeichnet.

Es wurde nun überraschend gefunden, daß durch diese Anordnung, die einer Ansammlung vieler kleiner Zyklone nicht unähnlich ist, grobe Partikel aus kleineren hergestellt werden. Von einem Zyklon unterscheidet sich die Vorrichtung durch die Bildung einer Schicht auf der Kanalwand, aus der sich Tropfen ablösen und von der gleichen Strömung mitgerissen werden, während ein Zyklon eine partikelarme und eine partikelreiche Strömung erzeugt.

Natürlich kann man die erfindungsgemäße Vorrichtung oder die Strömung auch intermittierend jeweils heizen und den Ruß verbrennen, bevor sich Tropfen aus der Schicht ablösen.

Die Erfindung unterscheidet sich von einem Agglomerator aus geprägtem Drahtnetz durch die Größe der Kanalquerschnitte, die Größe des Winkels ($\alpha$) und durch die Verwendung von Folie anstelle von Draht, wodurch sie besonders preiswert hergestellt werden kann. Weil es sich beim Mechanismus erfindungsgemäß um ein Ausschleudern handelt, im Fall des Draht-Netz-Agglomerators und auch im Fall gepreßter Drahtpakete oder den Drähten in Schalldämpfern aber um eine Abscheidung vermutlich auf Grund von Thermodiffusion, verbunden mit einem geringen Ausschleuderanteil mit einer nur max. 90°-Drehung der Strömung am Draht, ist auch die Funktion unterschiedlich.

Die Erfindung unterscheidet sich von Katalysatorträger-Monolithen aus Edelstahlfolie, die mit Schrägverzahnung oder pfeilförmiger Verzahnung nach dem Stand der Technik geprägt wurden, durch die Aufgabenstellung und dadurch im Winkel ($\alpha$) und in der Kanalquerschnittsgröße. Die erfindungsgemäße Vorrichtung könnte zum Zweck der Rußminderung um den Anteil der Kondensate im Ruß natürlich auch katalytisch aktiv beschichtet werden, dann geht aber der erfindungsgemäße Zweck der Tropfenbildung verloren und man erhält einen Katalysatorträger mit unnötig hohem Druckverlust.

Es ist aber denkbar, die erfindungemäße Vorrichtung mit einer Oxid-Pulver-Schicht auf der aus dem Stahl gewachsenen Zunderschicht auszustatten, um die Haftung der Rußschicht und damit die Größe der sich ablösenden Tropfen zu beeinflussen oder auch die Dicke der sich bildenden Rußschicht vor einer Verbrennung, die auch Regeneration genannt wird.

Anders als im weiteren gezeigt, kann man auch Spaltband, ca. 20 bis 60 mm breit, mit dem Winkel ($\alpha$) von ca. 60 bis 45° 0,3 bis 0,8 mm hoch prägen und daraus zylindrische Filter wickeln und löten, wobei dann die Strömung (2) in radialer Richtung durch die Filterkörper geführt wird. Mehrere solcher Zylinder können ebenfalls zu einem Monolithen zusammen geformt werden.

Filterkonstruktionen aus Edelstahlfolie haben den grundsätzlichen Vorteil, daß sie im Fall einer Rußverbrennung örtlich entstehende Überhitzung besser abbauen können im Vergleich zu Drahtkonstruktionen. Die Wärme wird von einem Flächenelement abgeführt und nicht nur linear in Drahtrichtung.

Die erfindungsgemäße Vorrichtung hat auch den Vorteil, daß sich immer wieder nach und in jedem größten Kanalquerschnitt eine neue Grenzschicht ausbilden muß.

Als Folienmaterial kommen für den Anwendungsfall der Anordnung der erfindungsgemäßen Vorrichtung am Ende einer Abgasanlage zur Partikelvergrößerung alle Stähle in Frage, die gegen stark verdünnte Schwefelsäure resistent sind. Das können Stähle mit ferritischem oder austenitischem Gefüge sein. Ordnet man die Vorrichtung so an, daß eine thermische Regeneration der sich bildenden Rußschicht wiederholt erfolgen soll, wird Material der Qualitäten 1.4767, 1.4765, 1.4841 oder 1.4843 bevorzugt verwendet. Für die ersten beiden Qualitäten ist 1.4510 als Hüllrohrwerkstoff geeignet. Die letzten beiden Qualitäten können als Folien- und Hüllrohrwerkstoff verwendet werden. Bei Anwendungen ohne eine thermische Regeneration kommen auch Qualitäten wie 1.4565, 1.4549 u. ä. in Frage.

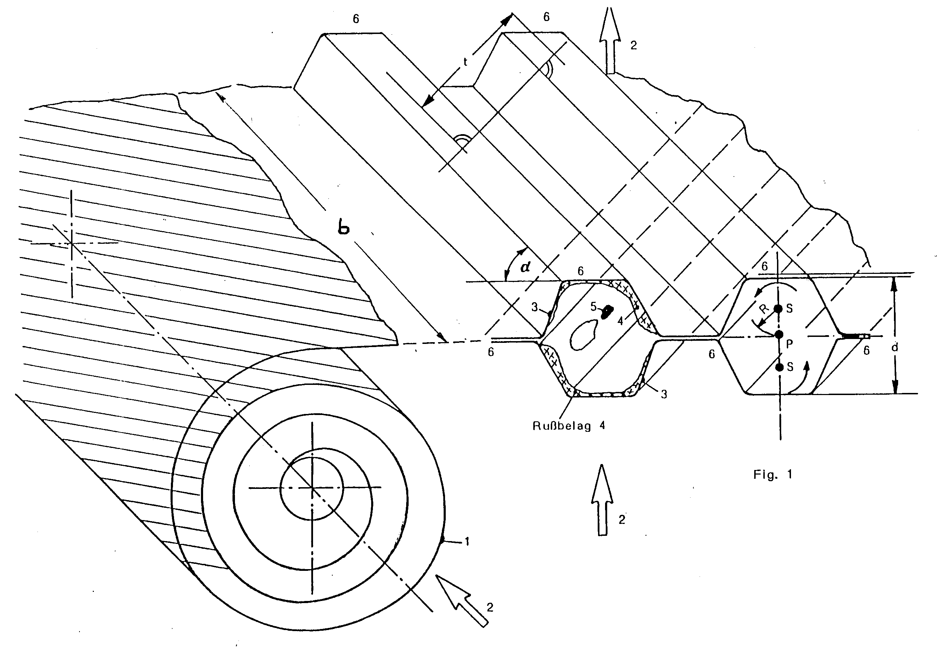

Fig. 1 zeigt eine Skizze der bevorzugten Ausbildung der Wellenprägung mit dem Winkel ($\alpha$), den Wellenbergen (6), der Folienlängsrichtung (7), der Andeutung eines Wickels aus zwei der Folien zum Segment (1), das sich aus Kanälen mit dem größten Durchmesser (d) zusammensetzt und die sich in Richtung $V_{rel}$. periodisch auf ca. 1/2 der Fläche verringern, also die Strömung sich auf die kleineren Teilkanäle aufteilt.

Die Wirksamkeit zur Partikelvergrößerung nimmt mit kleinerem (d) zu, aber auch der Druckverlust. Ein Optimum wird bei einem (d) von 0,8 bis 1,2 mm bei einem Winkel $\alpha$ von 60 bis 45° erreicht.

Eine Reynoldszahl von $\leq$ 1100 ist durch die Strömungsgeschwindigkeit als Massendurchsatz pro Stirnfläche und dem Durchmesser (d) besonders günstig, um auch Strömungsablösungen und Rückströmungen durch Wirbel zu vermeiden und so die Strömung trotz ihrer Drehung laminar zu halten.

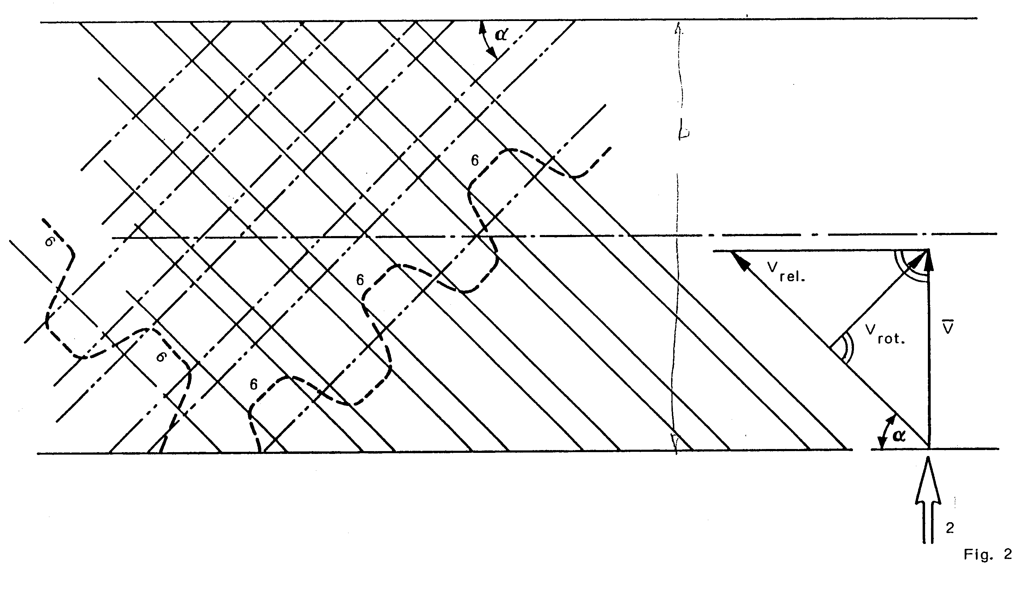

Fig. 2 zeigt das sich bildende Geschwindigkeitsdreieck. Die Relativgeschwindigkeit ($V_{rel}$) im Einzelkanal ist ein Maß für die Reibung der Strömung an der sich bildenden Rußschicht. Als Folge werden Tropfen aus der Schicht abgelöst und in Strömungsrichtung wieder angelagert, so daß das Ende der Vorrichtung besonders hoch mit Ruß beladen wird. Um nun besonders dicke Tropfen am Abgasanlagenaustritt zu erhalten, schlägt die Erfindung weiter vor, ein Segment mit größerem ($\alpha$) und ggf. größeren Durchmessern (d) nachzuschalten.

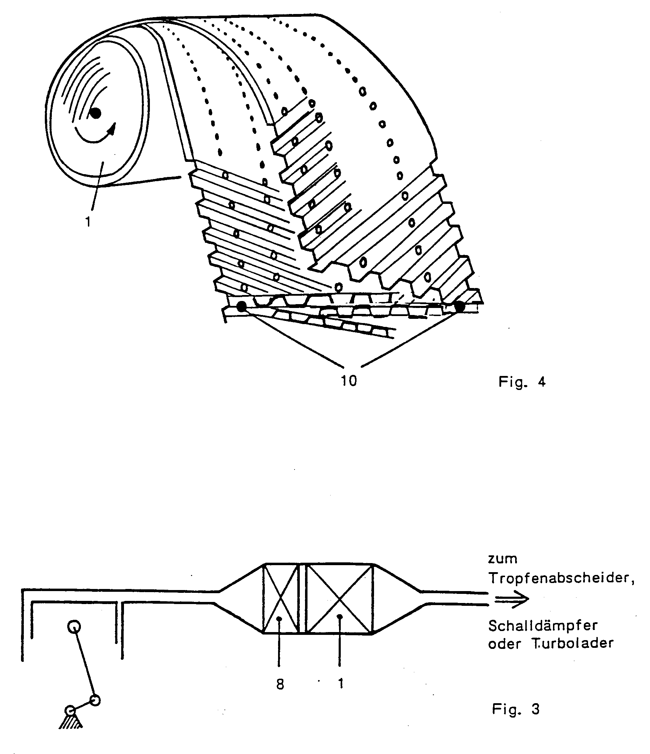

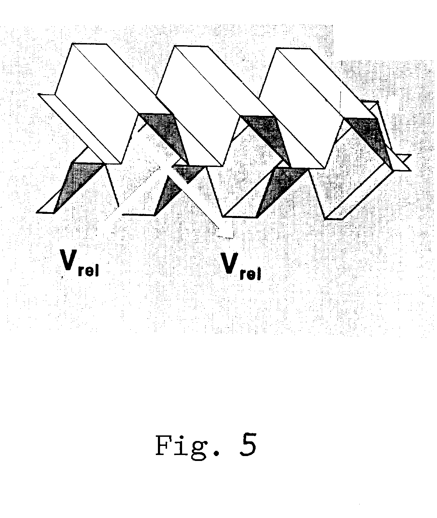

Insbesondere für den motornahen Einbau und für Dieselmotoren, die extrem kleine Partikel (z.B. 90 %-Gewicht 0,01 bis 0,03 $\phi$ $\mu$m) emittieren, schlägt die Erfindung weiterhin vor, dem erfindungsgemäßen Segment (1) ein Segment (8) vorzuordnen, welches die Partikeldurchmesser auf mehr als 0,1 $\phi$ $\mu$m vergrößert (Fig. 3). Besonders geringe Druckverluste werden dabei mit Bauformen erreicht, die der erfindungsgemäßen Vorrichtung geometrisch ähnlich sind, aber aus Edelstahl-Drahtnetz oder -Drahtgewebe bestehen, 3 bis 6 mm große maximale Durchmesser (d) aufweisen und bei denen der Winkel ($\alpha$) 60 bis 70° beträgt. In ihnen wird selbst unter der Annahme der Belegung mit einem dichten Filterkuchen (der sich nicht bildet) eine Reynoldszahl von < 1900 verwirklicht und eine maximale Radialbeschleunigung von $\leq$ 50 000 m/s$^2$. Tatsächlich bildet sich kein Filterkuchen, sondern die Agglomeration erfolgt vermutlich über den Weg "Thermodiffusion an den Draht, Tropfenablösung durch turbulente Strömung mit hoher Scherkraft am Rußbelag des Drahtes". Die Drähte selbst sorgen für eine starke Durchmischung der Strömung, indem sie Turbulenz (nicht eine in der Richtung konstante Drehung der Strömung) hervorrufen.

Es kann nun weiterhin günstig sein, entsprechend Fig. 4 Lochreihen oder Schlitzreihen quer zur Strömungsrichtung 2 in den Kanalwänden anzuordnen. Die wendet man bevorzugt dann an, indem die Folie in Folienlängsrichtung um 180° auf halbe Breite gefaltet wird und dann die Wellenprägung erfolgt, und je zwei dieser Folien entsprechend Fig. 4 zusammengesteckt und gemeinsam aufgewickelt werden. Auf diese Weise kommt man zu etwas längeren Segmenten (1) aus umgeklappten Folien (10) mit geringerer Breite als (1).

Es ist auch möglich, die Prägeform so auszubilden, daß an der Gasaustritts-Stirnfläche der Vorrichtung (1) kleinere Kanalquerschnitte und an der Eintrittsstirnfläche größere Kanalquerschnitte gebildet werden, indem man z.B. die Folienlagen säbelig in Längsrichtung prägt. Der entstehende Wickel bildet dann eine Kegelfläche. Dies ist vorteilhaft in bezug auf den Druckverlust und auf die Festigkeit des Körpers nach dem Löten oder Schweißen (z.B. Laser- oder Elektronenstrahl- schweißung).

Die Vorrichtung wird bevorzugt am Ende einer bestehenden Abgasanlage oder möglicherweise auch als Ersatz der zweiten Schalldämpfers eingebaut. Es bietet sich aber auch an, der Vorrichtung einen Tropfenabscheider zusammen mit einem Auffanggefäß nachzuordnen. Ein üblicher Tropfenabscheider wird beispielsweise in der Zeitschrift Metalloberfläche 45 (1991) 7, "Abluftreinigung mit Tropfenabscheidern" beschrieben.

Ausführungsbeispiel

Es wurde eine 50 μm dicke Folie aus 1.4767 So 0,02 Cer, 160 mm breit, unter einem Winkel (α) von 50° so mit Hilfe eines verzahnten Walzenpaares geprägt, daß eine Wellen- (Präge-) Höhe von 0,81 mm bei einer Teilung (t) von 1,96 mm mit einer Folienbreite von 150 mm entstand. Die Enden eines ersten Folienabschnitts wurden auf ein Rohrstuck von 20 φ mm aus 1.4841 punktgeschweißt. Ein zweites Folienband wurde gegenüber dem ersten um 180° in der Folienlängsrichtung gedreht und ebenfalls an das Rohrstück punktgeschweißt. Ein Rohrstück ist dann nicht zum Aufwickeln nötig, wenn mit zwei Mittelpunkten aufgewickelt wird.

Hier wurde aber so ein Wickel mit einem Durchmesser von 100 φ mm hergestellt und die Folienenden am Wickelumfang durch Punktschweißen befestigt. Anschließend wurde im Ultraschallbad entfettet und eine Stirnseite mit dem Lot L Ni 5 mit Hilfe eines flüssigen Binders nach Stand der Technik belotet. Um den Wickel wurde ein geschlitztes Rohrstück aus 1.4510 gezogen und durch Zusammenziehen angepreßt, der Schlitz verschweißt, zusätzliches Lot in den Bereich der letzten Wicklung/Hüllrohr an den Stirn- flächen aufgebracht, der Körper stehend im Hochvakuumofen bei bis zu 1180° (1 h) gelötet. Nach Abkühlung und Entnahme aus dem Ofen wurde der so entstandene Monolith bei 930° an Luft 16 h geglüht und anschließend Trichter und Abgasrohrstücke angeschweißt. Insgesamt weist der Monolith eine Folienmenge von 0,7 kg auf und damit eine im Vergleich zu einem Keramikmonolithen sehr kleine Wärmekapazität. Der Druckverlust, mit Luft 1 bar bei 25°C gemessen, beträgt bei 260 m³/h 90 mb, bei 130 m³/h 25 mb. Mit Abgas beträgt der Druckverlust bei 260°C und 230 m³/h (i.N.) etwa 200 mb.

Die Abscheideraten können mit den Partikeldurchmessern nach Fang, C.P., SAE 840362 näherungsweise berechnet werden.

Partikelfeinanteil mit 86 %-Gewicht = 0,165 φ μm im Mittel

Partikelgrobanteil mit 14 %-Gewicht = 1,66 φ μm im Mittel

Berechnung der Filterwirkung bei 300°C

| Eingangsdaten: | |
|---|---|
| 01. Körperdurchmesser mm | 100 |
| 02. Körperlänge mm | 150 |
| 03. Stirnfläche cm² | 78,5 |
| 04. Winkel, Wellenrichtung zur Folienrichtung | 50° |
| 05. Prägehöhe mm | 0,81 |
| 06. Foliendicke μm | 50 |
| 07. Werkstoff 1.4767 So 0,02 Cer | |
| 08. Durchsatz Luft m³/h (i.N.) | 250 |
| 09. Dynamische Viskosität $\eta_L$ von Luft bei 300°C kg/ms | $30,75 \cdot 10^{-6}$ |
| 10. Dichte von Ruß $\rho_L$ g/cm³ | 1,5 |

Aus 03. und 08. ergibt sich die mittlere Gasgeschwindigkeit $\overline{V}$ in achsialer Richtung des Wickels zu 16,8 m/s und die Reynoldszahl zu 546 am größten auftretenden Querschnitt nach

$$ Re = \frac{\rho_L \cdot d \cdot \overline{v} \cdot}{\eta_L} $$

Entsprechend Fig. 2 folgt aus den Geschwindigkeitsdreiecken die Relativgeschwindigkeit in den Teilkanälen zu

$V_{rel.} = \overline{V}/\cos(90-\alpha)$

und die Rotation der Teilströme in den Teilkanälen

$V_{rot.} = \overline{V} \cdot \sin(90-\alpha)$

$\overline{V}$ ist in der Stromlinie von Punkt P, Fig 1. erfüllt. $V_{rot.}$ ist der senkrecht zu $V_{rel.}$ vorhandene Anteil von $\overline{V}$.

Die Strömung in den Teilkanälen dreht sich jeweils um den Flächenschwerpunkt S des Querschnittes des Teilkanales. Vereinfachend wird hier mit dem Drehradius R = d/4 von 0,4 mm gerechnet. Damit erhält man die Zentrifugalbeschleunigung auf die Partikel

$$\omega^2 \cdot R = \frac{V_{rot}^2}{R}$$
$$= 291\ 600,\ m/s^2$$

Die Verweilzeit des Gases im Wickel beträgt

$$t_v = s/\bar{V} \qquad mit\ s = 150\ mm$$
$$= 0,00823\ s$$

Dem Stoke'schen Gesetz folgend ergibt sich die Diffusionsgeschwindigkeit $V_d$ der Partikel (T) in radialer Richtung

$$V_d = \frac{\zeta_T \cdot d_T^2 \cdot \omega^2 R}{18 \cdot \eta}$$

mit einem Partikeldurchmesser von 0,165 $\phi$ $\mu$m zu

$V_d = 0,021514\ m/s$

und der Diffusionsweg der Partikel zu

$s_d = 177 \cdot 10^{-6}\ m$

Damit wird vom Querschnitt der Teilkanäle über die ganze Wickellänge, wenn die Strömung jeweils mit dem aufgeprägten Drall in den kleinsten Querschnitt in den Teilkanal eintritt, ein Flächenanteil entsprechend

$$\left( \frac{0,8 - 0,353}{0,8} \right)^2 = 0,311$$

nicht abgereichert. Der abgereicherte Anteil beträgt also
69,9 %
Partikeldurchmesser von 1,66 $\phi$ $\mu$m werden analog gerechnet zu mehr als 99 %-Gewicht abgeschieden, wenn der "Filter" im unbeladenen Zustand vorliegt. Der "Filterwirkungsgrad" beträgt damit
84 %.
Die dynamische Viskosität des Abgases ist um einige Prozentpunkte kleiner als die von Luft, was sich hier günstig auswirkt. Ebenso wirken tiefere Temperaturen am Ende einer üblichen Abgasanlage.

**Patentansprüche**

1. Vorrichtung zur Vergrößerung von kleinen klebrigen Partikeln, die aus gestapelten und/oder aufgewik-kelten, unter einem Winkel ($\alpha$) zur Folienlängsrichtung schräg gewellten Metallfolien besteht, wobei die Wellungen in benachbarten Folien kreuzweise liegend, in den benachbarten Folien zueinander offene Kanäle bilden und die durch diese Kanäle hindurchtretenden Teilströme sich gegenseitig einen Drall aufprägen,

**dadurch gekennzeichnet,** daß die Kanäle einen Winkel ($\alpha$) im Bereich von 45 und 60° zur Folienlängsrichtung bilden und die Kanalgeometrie und die Strömungsgeschwindigkeit auf die Ausbildung einer laminaren Strömung mit einer Reynoldszahl von < 1.900 abgestimmt sind, wobei die Reynoldszahl mit dem in der Überschneidung zweier sich kreuzender Kanäle größten vorkommenden Durchmesser d berechnet wird.

2. Vorrichtung nach Anspruch 1,

    **dadurch gekennzeichnet,** daß sie aus wellig geprägten Edelstahlfolien mit mehr als (in Gew.-%) 13 % Chrom und 0 bis 10 % Aluminium, 0 bis 6 % Molybdän, 0 bis 24 % Nickel, 0 bis 0,4 Seltenen Erden, 0 bis 2 % Y, 0 bis 3 % Cu, 0 bis 2 % jeweils Titan und/oder Zirkonium Rest Eisen und übliche Stahlverunreinigungen, besteht.

3. Vorrichtung nach Anspruch 1 oder 2,

    **dadurch gekennzeichnet,** daß die Metallfolien eine Dicke von 0,02 bis 0,15 mm haben.

4. Vorrichtung nach einem der Ansprüche 1 bis 3,

    **dadurch gekennzeichnet,** daß der in der Überschneidung zweier sich kreuzender Kanäle größte vorkommende Durchmesser d kleiner 2 mm ist.

5. Vorrichtung nach einem der Ansprüche 1 bis 4,

    **dadurch gekennzeichnet**, daß der in der Überschneidung zweier sich kreuzender Kanäle größte vorkommende Durchmesser d kleiner 1,2 mm ist und die Reynoldszahl kleiner 1.100 beträgt.

6. Vorrichtung nach einem der Ansprüche 1 bis 5,

    **dadurch gekennzeichnet**, daß die Breite (b) der gestapelten und/oder aufgewickelten Metallfolien in dem Bereich von 60 bis 180 mm liegt.

7. Vorrichtung zur Vergrößerung von kleinen klebrigen Partikeln,

    **dadurch gekennzeichnet**, daß sie aus mindestens zwei Segmenten mit den Mermalen der Vorrichtung gemäß den vorstehenden Ansprüchen 1 bis 6 besteht und eine Länge in dem Bereich von 60 bis 180 mm aufweist.

8. Vorrichtung zur Vergrößerung von kleinen klebrigen Partikeln,

    **dadurch gekennzeichnet**, daß vor der Vorrichtung mit den Merkmalen nach einem der vorstehenden Ansprüche 1 bis 7 ein weiteres Segment 8 angeordnet ist, das aus einem Drahtnetz oder Drahtgewebe aus Edelstahl mit einem Drahtdurchmesser in dem Bereich von 0,05 bis 0,2 mm und Maschenweiten von 0,15 bis 0,4 mm besteht, in Strömungsrichtung 60 bis 160 mm lang ist, analog zu der Vorrichtung mit den Merkmalen gemäß den vorstehenden Ansprüchen 1 bis 7 geformt ist, einen größten Durchmesser d im Bereich von 3 mm bis 6 mm und einen Winkel $\alpha$ in dem Bereich von 60° bis 70° aufweist.

9. Vorrichtung nach einem der Ansprüche 1 bis 8,

    **dadurch gekennzeichnet**, daß die geprägten Edelstahlfolien Lochreihen oder Schlitzreihen mit Durchmessern der Löcher oder Schlitzbreiten quer zur Strömungsrichtung von 30 bis 200 $\mu$m aufweisen und die Lochreihen und Schlitzreihen mit mehr als jeweils 3 mm Abstand in Strömungsrichtung angeordnet sind und jeweils zwei Folienlagen abwechselnd in radialer Richtung der Wickelkörperstirnflächen gesehen, gasdicht an den zwei Stirnflächen miteinander verbunden sind.

7

Fig. 1

Fig. 2

1

10

Fig. 4

zum
Tropfenabscheider,

Schalldämpfer
oder Turbolader

8      1

Fig. 3

Fig. 5

Europäisches
Patentamt

Nummer der Anmeldung

EP    93 10 4929

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 094 658 (KERNFORSCHUNGANLAGE JULICH GMBH)<br>* das ganze Dokument *<br>--- | 1,2,8 | B01D46/52<br>F01N3/02 |
| A | EP-A-0 289 817 (THYSSEN EDELSTAHLWERKE AG)<br>* Ansprüche 1-6; Abbildung 4 *<br>--- | 1 | |
| D,A | SAE 1984 TRANSACTIONS<br>SECTION 2-VOLUME 93. 1985<br>NUMBER 840362. C.P. FANG ET AL.:<br>"THE INFLUENCE OF A FIBROUS DIESEL ....."<br>* Seite 2868 *<br>--- | 1 | |
| A | DE-U-8 900 467 (EMITEC)<br>* Ansprüche 1-10; Abbildungen 1-5 *<br>--- | 1,4,5,8 | |
| A | DE-A-3 726 072 (THYSSEN EDELSTAHLWERKE AG)<br>* das ganze Dokument *<br><br>----- | 1,2 | |

**RECHERCHIERTE SACHGEBIETE (Int. Cl.5)**

B01D
F01N
B01J

Der vorliegende Recherchenbericht wurde für alle Patentansprüche erstellt

| Recherchenort | Abschlußdatum der Recherche | Prüfer |
|---|---|---|
| DEN HAAG | 29 JULI 1993 | CUBAS ALCARAZ J.L. |